(19) Europäisches Patentamt
European Patent Office
Office européen des brevets

(11) EP 2 022 648 B1

(12) **EUROPEAN PATENT SPECIFICATION**

(45) Date of publication and mention of the grant of the patent:
**11.01.2012 Bulletin 2012/02**

(21) Application number: **07743854.7**

(22) Date of filing: **22.05.2007**

(51) Int Cl.:
***B60C 9/00*** *(2006.01)* ***B60C 15/06*** *(2006.01)*

(86) International application number:
**PCT/JP2007/060420**

(87) International publication number:
**WO 2007/136055 (29.11.2007 Gazette 2007/48)**

(54) **PNEUMATIC TIRE**

LUFTREIFEN

PNEUMATIQUE

(84) Designated Contracting States:
**DE ES FR GB IT**

(30) Priority: **23.05.2006 JP 2006142651**

(43) Date of publication of application:
**11.02.2009 Bulletin 2009/07**

(73) Proprietor: **Bridgestone Corporation
Tokyo 104-0031 (JP)**

(72) Inventor: **YAMAMOTO, Masahiko
Kodaira-shi, Tokyo 187-0031 (JP)**

(74) Representative: **Whalley, Kevin
Marks & Clerk LLP
90 Long Acre
London WC2E 9RA (GB)**

(56) References cited:
**WO-A1-2006/080253**
**JP-A- 11 334 313**
**JP-A- 2001 164 422**
**JP-A- 2001 262 437**
**JP-A- 2001 334 807**
**JP-A- 2001 341 504**
**JP-A- 2002 307 908**
**JP-A- 2002 339 275**
**JP-A- 2003 013 326**
**JP-A- 2004 091 969**
**JP-A- 2004 306 657**
**JP-A- 2007 131 223**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 022 648 B1

## Description

### Technical Field

The present invention relates to a pneumatic tire (hereinafter simply referred to as "tire" in some cases) and particularly relates to a pneumatic tire in which steering stability is securely prevented from being varied due to changes in speed, ambient temperature or the like during running.

### Background Art

In general, organic fiber cords made of rayon, nylon, polyester, or the like are used as reinforcing cords for carcasses of conventional pneumatic tires. Since the organic fiber cords have low initial tensile strength, however, tires including carcasses containing the cords may be distorted because the cords are stretched during the use of the tires. Therefore, the tires may be reduced in running performance; hence, there is a problem in that it is difficult to use the tires under severe conditions such as ultra-high speed conditions.

Cords including polyketone fibers are known to have high initial tensile strength. Tires including these cords have good balance between heavy-load durability and steering stability (see Patent Documents 1 and 2). In recent years, polyketone fibers having high heat shrinkage stress are under development (see Patent Document 3).

Patent Document 1: Japanese Unexamined Patent Application Publication No. 2000-190705
Patent Document 2: Japanese Unexamined Patent Application Publication No. 2002-307908
Patent Document 3: Japanese Unexamined Patent Application Publication No. 2004-218189

### Disclosure of Invention

### Problems to be Solved by the Invention

It is unavoidable that conventional tires are varied in road-holding property and/or steering stability because the tire cases are reduced in stiffness due to the reduction in rubber stiffness under such conditions that the tires are heated during high-speed running or low-internal pressure running.

It is an object of the present invention to provide a pneumatic tire in which steering stability is securely prevented from being varied due to changes in speed, ambient temperature or the like during running.

### Means for Solving the Problems

In order to solve the above problems, a pneumatic tire according to the present invention includes a tread part, a pair of sidewall parts extending from both ends of the tread part in the radial direction of the tire, a pair of bead parts located at the inside ends of the sidewall parts, a carcass layer which includes at least one carcass ply and which toroidally extends between a pair of bead cores embedded in the bead parts, bead fillers arranged outside the bead cores in the radial direction of the tire, and belt layers which are arranged outside a crown portion of the carcass layer in the radial direction thereof and which each include at least one belt ply. A cord having a difference in heat shrinkage stress between 30°C and 80°C of not less than $3.0 \times 10^{-2}$ cN/dtex is used as a cord in the at least one carcass ply of the carcass layer. The reduction rate of the 30-80°C dynamic storage elastic modulus E' of rubber used to form the bead fillers is 5% or more.

In the pneumatic tire according to the present invention, the cord in the at least one carcass ply preferably contains 50% by mass or more of polyketone fibers. The polyketone fibers preferably have a tensile strength of 10 cN/dtex or more and an elastic modulus of 200 cN/dtex or more and also have a heat shrinkage after dry-heat treatment at 150°C $\times$ 30 min in a range of 1% to 5%, respectively. The belt-protecting layer preferably includes at least one cord. The difference between the heat shrinkage stress of the cord at 30°C and that of the cord at 80°C is preferably $7.0 \times 10^{-2}$ cN/dtex or more. The reduction rate of the 30-80°C dynamic storage elastic modulus E' of the rubber used to form the bead fillers is preferably 15% or more.

### Advantages

According to the present invention, steering stability can be securely prevented from being varied due to changes in speed, ambient temperature or the like during running. Brief Description of Drawings

Fig. 1 is a widthwise sectional view of a pneumatic tire according to an embodiment of the present invention.

Reference Numerals

1 tread part
2 sidewall part
3 bead part
4 bead core
5 carcass layer
6 belt layer
7 belt-protecting layer
8 bead filler
10 pneumatic tire

Best Modes for Carrying Out the Invention

Preferred embodiments of the present invention will now be described in detail with reference to the accompanying drawing.

Fig. 1 is a schematic sectional view of an example of a pneumatic tire according to a first embodiment of the present invention. A tire 10 includes a tread part 1, a pair of sidewall parts 2 extending from both ends of the tread part 1 in the radial direction of the tire, a pair of bead parts 3 located at the inside ends of the sidewall parts 2, and a carcass layer 5 which includes at least one carcass ply (one ply as shown in the figure) and which toroidally extends between a pair of bead cores 4 embedded in the bead parts 3. Bead fillers 8 are arranged outside the bead cores 4 in the radial direction of the tire. The tire 10 further includes belt layers 6 which are arranged outside a crown portion of the carcass layer 5 in the radial direction thereof and which each include at least one belt ply (two inclined belt layers as shown in the figure) and also includes at least one belt-protecting layer 7 (one layer as shown in the figure) located outside the belt layers 6 in the radial direction of the tire. The belt-protecting layer 7 shown in the figure includes cords arranged substantially in parallel to the equatorial plane E of the tire and substantially entirely covers the width of the belt layers 6. Of necessary, the belt-protecting layer 7 is used to prevent tire failure due to the separation of belt ends and may extend over both end portions of the belt layers 6 at least.

The tread part 1, as well as that of an ordinary tire, may have a plurality of tread grooves such as circumference-wise grooves extending in the circumferential direction of the tire and/or lateral grooves intersecting with the circumference-wise grooves, a plurality of sipes, and/or the like depending on applications, the circumference-wise and lateral grooves and the sipes being not shown.

In the present invention, the reduction rate of the 30-80°C dynamic storage elastic modulus E' of rubber used to form the bead fillers 8 is preferably 5% or more and more preferably 15% or more. The compound of a rubber composition for such coating rubber is not particularly limited and may be appropriately selected in accordance with customary practice.

In the present invention, the at least one carcass ply of the carcass layer 5 includes a cord having a difference in heat shrinkage stress between 30°C and 80°C of preferably $3.0 \times 10^{-2}$ cN/dtex or more, more preferably $7.0 \times 10^{-2}$ cN/dtex or more.

The cord of the carcass ply contains polyketone fibers. The content of the polyketone fibers in each cord is 50% by mass or more, preferably 70% by mass or more, and more preferably 100% by mass. When the polyketone fiber content is 50% by mass or more, the tire has high strength, high heat resistance, and high adhesion to rubber.

In the present invention, the rubber of the bead fillers 8 and the cord of the carcass ply are esch defined as described above. Therefore, the rubber of the bead fillers 8 is reduced in stiffness and the cords of the carcass ply are increased in tension due to the heat shrinkage of the cords when the temperature of the tire is increased during high-speed running or low-internal pressure running. This can maintain the spring of the tire relatively constant and can prevent the tire from being varied in road-holding ability and/or steering stability.

In particular, actions below occur.

(1) An increase in centrifugal force due to an increase in running speed increases the protrusion of the tire or a reduction in the pressure in the tire increases the distortion of the tire; hence, the temperature of the tire is increased.
(2) An increase in the tire temperature reduces the stiffness of the bead filler rubber, that is, an increase in the tire temperature reduces the stiffness of a tire case.
(3) An increase in the tire temperature generates heat shrinkage stresses in the carcass ply cords to increase the tension of the carcass ply, that is, an increase in the tire temperature increases tension and stiffness.
(4) Actions (2) and (3) prevent the variation of the tire stiffness, thereby preventing the road-holding ability and

steering stability of the tire from being varied.

The polyketone fibers, which are contained in the carcass ply cords, preferably have a tensile strength of 10 cN/dtex or more and more preferably 15 cN/dtex or more. When the tensile strength thereof is less than 10 cN/dtex, the tire has insufficient strength.

The polyketone fibers, which are contained in the carcass ply cords, preferably have an elastic modulus of 200 cN/dtex or more and more preferably 250 cN/dtex or more. When the elastic modulus thereof is less than 200 cN/dtex, the tire has insufficient shape retainability.

The polyketone fibers, which are contained in the carcass ply cords, preferably have a heat shrinkage of 1% to 5% and more preferably 2% to 4% after being dry-heated at 150°C for 30 minutes. When the polyketone fibers dry-heated at 150°C for 30 minutes have a heat shrinkage of less than 1%, the efficiency of paralleling the polyketone fibers by heating during the production of the tire is remarkably low and therefore the tire strength and the case stiffness are nonuniform. On the other hand, when the polyketone fibers dry-heated at 150°C for 30 minutes have a heat shrinkage of greater than 5%, the cords are significantly shrunk by heat during the production of the tire and therefore the finished tire may have a wrong shape and low uniformity.

The cords, which are usable herein and contain at least 50% by mass or more of the polyketone fibers (hereinafter simply referred to as "PK fibers"), will now be described in detail.

Examples of fibers other than the PK fibers include, but are not limited to, nylon fibers, ester fibers, rayon fibers, polynosic fibers, lyocell fibers, and vinylon fibers.

The dry heat shrinkage of each PK fiber is herein determined from the following equation:

$$\text{dry heat shrinkage (\%)} = (Lb - La) / Lb \times 100$$

wherein Lb is the length of the unheated PK fiber and La is the length of the heated PK fiber. In particular, the dry heat shrinkage thereof is determined in such a manner that the unheated PK fiber is measured for length with a load of 1/30 (cN/dtex) applied to the unheated PK fiber, the PK fiber is dry-heated at 150°C for 30 minutes in an oven, and the heated PK fiber is measured for length with a load of 1/30 cN/dtex applied to the heated PK fiber. The tensile strength and tensile elastic modulus of the PK fiber are determined in accordance with JIS-L-1013. The tensile elastic modulus thereof is equal to an initial elastic modulus calculated from the load corresponding to an elongation of 0.1% and the load corresponding to an elongation of 0.2%.

In particular, the carcass ply cords, which are usable herein, are preferably PK fiber cords described below in detail. Each cord has a decitex of 1000 to 20000 and the PK fibers are of a multifilament twisted type. Since the cord has a decitex of 1000 to 20000, the cord has high stiffness and is lighter than steel cords, which is an advantage of an organic fiber. When the cord has a decitex of less than 1000, the carcass ply cannot have sufficient strength or stiffness. When the cord has a decitex of greater than 20000, the carcass ply has an extremely large gauge, resulting in an increase in the mass of the tire and/or a deterioration in the quality of the tire.

The maximum heat shrinkage stress of the cord is defined as the maximum stress (in cN/dtex) that is generated in the cord when a 25-cm long fixed sample of a PK fiber cord which has been treated by an ordinary bonding process and which is unvulcanized is heated to 177°C at a rate of 5°C/min.

The cord preferably has a twist coefficient of 0.25 to 1.25. The twist coefficient $\alpha$ of the cord is defined by the following equation:

$$\alpha = T \times \sqrt{0.126 \times D / \rho} \times 10^{-3} \qquad \text{(I)}$$

wherein $\alpha$ is the twist coefficient of the cord, T is the number of twist (turns per 100 mm), D is the fineness (dtex) of the cord, and $\rho$ is the density (g/cm$^3$) of a fiber material used in the cord. When the twist coefficient $\alpha$ of the PK fiber cord is less than 0.25, the cord cannot have a sufficient heat shrinkage stress. On the other hand, when the twist coefficient thereof is greater than 1.25, the cord cannot have a sufficient elastic modulus and therefore has low reinforcing ability.

A polyketone used to produce the PK fibers preferably substantially consists of repeating units represented by the following formula:

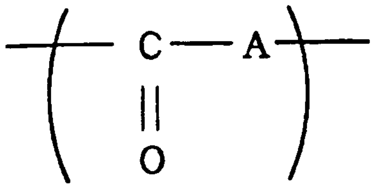

(II)

wherein A represents each moiety derived from a polymerized unsaturated compound having an unsaturated bond and may be identical to or different from moieties of the repeating units. In the polyketone, 97% by mole or more of the repeating units are preferably 1-oxotrimethylene ($-CH_2-CH_2-CO-$), 99% by mole or more of the repeating units are more preferably 1-oxotrimethylene, and 100% by mole of the repeating units are most preferably 1-oxotrimethylene.

The polyketone may contain portions in which ketone groups are bonded to each other or the unsaturated compound-derived moieties are bonded to each other. The polyketone preferably contains 90% by mole or more of portions in which the ketone groups and the unsaturated compound-derived moieties are alternately arranged, more preferably 97% by mole or more, and most preferably 100% by mole.

The unsaturated compound, which produces A in the formula (II), is most preferably ethylene and may be an unsaturated hydrocarbon, such as propylene, butene, pentene, cyclopentene, hexene, cyclohexene, heptene, octene, nonene, decene, dodecene, stylene, acetylene, or allene, other than ethylene; an compound, such as methyl acrylate, methyl methacrylate, vinyl acetate, acrylic amide, hydroxyethyl methacrylate, undecenic acid, undecenol, 6-chlorohexene, N-vinylpyrrolidone, diethyl sulfonylphosphonate, sodium styrenesulfonate, sodium allylsulfonate, vinylpyrrolidone, or vinyl chloride, having an unsaturated bond; or the like.

The degree of polymerization of the polyketone is determined from the limiting viscosity thereof. The limiting viscosity thereof is defined by the following equation:

$$[\eta] = \lim_{c \to 0} \frac{(T - t)}{(t \cdot c)} \qquad \text{(III)}$$

wherein η represents the limiting viscosity, t represents the time taken for hexafluoroisopropanol with a purity of 98% or more to pass through a viscosity tube at 25°C, T represents the time taken for a dilute solution of the polyketone in hexafluoroisopropanol with a purity of 98% or more to pass through the viscosity tube at 25°C, and c represents the mass (g) of the solute in 100 mL of the dilute solution. The polyketone preferably has a limiting viscosity of 1 to 20 dL/g and more preferably 3 to 8 dL/g. When the limiting viscosity of the polyketone is less than 1 dL/g, the molecular weight of the polyketone is excellent small; hence, it is difficult to obtain a high-strength polyketone fiber cord and process troubles such as fluffing and filament breakage may occur during spinning, drying, or drawing. On the other hand, when the limiting viscosity thereof is greater than 20 dL/g, it takes a long time and large cost to synthesize the polymer, it is difficult to dissolve the polymer in a solvent, and the spinnability and properties of the polymer may be poor.

The PK fibers preferably have a degree of crystallinity of 50% to 90% and also have a crystal structure with a degree of crystalline orientation of 95% or more. When the PK fibers have a degree of crystallinity of less than 50%, the fibers have an insufficient structure and therefore may have insufficient strength, poor heat-shrinking properties, and low dimensional stability. Hence, the PK fibers preferably have a degree of crystallinity of 50% to 90% and more preferably 60% to 85%.

The polyketone is preferably processed into a fiber by the following procedure: (1) the polyketone is spun into an undrawn filament and the undrawn filament is treated by a multistage hot drawing process in such a manner that the undrawn filament is drawn at a specific temperature and a specific magnification in the final drawing step of the multistage hot drawing process or (2) the polyketone is spun into an undrawn filament, the undrawn filament is hot-drawn, and the hot-drawn filament is quenched with high tension applied to the hot-drawn filament. Desired filaments suitable for producing the polyketone fiber cord can be obtained in such a manner that the polyketone is spun by the method (1) or (2).

A process for spinning the polyketone into the undrawn filament is not particularly limited and may be known conventional one. Examples of the spinning process include wet-spinning processes which each use an organic solvent such as hexafluoroisopropanol or m-cresol and which are each disclosed in Japanese Unexamined Patent Application Publication No. 2-112413, Japanese Unexamined Patent Application Publication No. 4-228613, or PCT Japanese Translation Patent Publication No. 4-505344 and wet-spinning processes which each use an aqueous solution of a zinc salt, a calcium salt, a thiocyanate, or an iron salt and which are each disclosed in International Publication No. WO 99/18143,

International Publication No. WO 00/09611, Japanese Unexamined Patent Application Publication No. 2001-164422, Japanese Unexamined Patent Application Publication No. 2004-218189, or Japanese Unexamined Patent Application Publication No. 2004-285221. In particular, the wet-spinning processes using the aqueous solution are preferable.

For the wet-spinning processes using the organic solvent, the polyketone polymer is dissolved in hexafluoroisopropanol or m-cresol such that a solution with a polyketone content of 0.25% to 20% by mass is obtained; the solution is extruded into fibers through spinning nozzles; and the fibers are rinsed in a non-solvent bath such as a toluene bath, an ethanol bath, an isopropanol bath, a n-hexane, an isooctane bath, an acetone bath, or a methyl ethyl ketone bath such that the organic solvent is removed from the fibers, whereby undrawn filaments of the polyketone can be obtained.

For the wet-spinning processes using the aqueous solution, the polyketone polymer is dissolved in the aqueous solution containing the zinc salt, the calcium salt, the thiocyanate, or the iron salt such that a solution with a polyketone content of 2% to 30% by mass is obtained; this solution is extruded through spinning nozzles into a coagulation bath at a temperature of 50°C to 130°C such that gel filaments are obtained; and the gel filaments are desalted and then dried, whereby undrawn filaments of the polyketone can be obtained. The aqueous solution, which is used to dissolve the polyketone polymer, preferably contains a zinc halide and an alkali metal halide or an alkaline-earth metal halide. The coagulation bath may contain water, an aqueous solution of a metal salt, or an organic solvent such as acetone or methanol.

The obtained undrawn filament is preferably processed by a hot-drawing process in such a manner that the undrawn filament is heated to a temperature higher than the glass transition point of the undrawn filament and then drawn. If the undrawn filament is obtained by the method (2), the undrawn filament may be drawn in one step. However, the undrawn filament is preferably drawn through several steps. Examples of the hot-drawing process include, but are not limited to, processes in which filaments are transferred on heating rollers or heating plates. The temperature of hot-drawing the undrawn filament preferably ranges from 110°C to the melting point of the polyketone. The overall draw ratio of the undrawn filament is preferably ten or more.

In the case where the polyketone is spun by the method (1), the temperature of the final drawing step of the multistage hot drawing process preferably ranges from 110°C to a temperature that is 3°C lower than the temperature of the drawing immediately before to the final drawing step. The draw ratio of the filament drawn in the final drawing step preferably ranges from 1.01 to 1.5. In the case where the polyketone is spun by the method (2), the tension applied to the hot-drawn filament preferably ranges from 0.5 to 4 cN/dtex, the cooling rate of the filament, which is quenched, is preferably 30°C/s or more, and the filament is preferably cooled to 50°C or less. A process for quenching the hot-drawn polyketone filament is not particularly limited and may be known conventional one. In particular, a cooling process using a roller is preferably used. Since the polyketone filament obtained as described above has a large residual elastic strain, the polyketone filament is preferably performed relaxation heat treatment such that the length of the hot-drawn polyketone filament is reduced. The temperature of heat-relaxing the polyketone filament preferably ranges from 50°C to 100°C. The relaxation ratio of the polyketone filament preferably ranges from 0.980 to 0.999.

In order to make full use of the high heat shrinkability of the PK fiber cord, the processing temperature of the PK fiber cord or the usage temperature of a molded product is preferably close to a temperature (maximum heat-shrinking temperature) at which the PK fiber cord has a maximum heat shrinkage stress. In particular, the maximum heat-shrinking temperature preferably ranges from 100°C to 250°C and more preferably 150°C to 240°C because a processing temperature such as a vulcanization temperature or an RFL treatment temperature during bonding treatment performed as required ranges from 100°C to 250°C and the temperature of a tire material heated by repeated use or high-speed rotation reaches 100-250°C.

A coating rubber for covering the carcass ply cords may be used in any form and is particular used in a coating or sheet form. The coating rubber is not particularly limited and may be made from a known rubber composition.

## Examples

The present invention will be further described in detail with reference to examples.

(Preparation of PK fiber)

A polyketone polymer was produced by a perfect alternating copolymerization of ethylene and carbon monoxide prepared by an ordinary process so as to have a limiting viscosity of 5.3. The polyketone polymer was added to an aqueous solution containing 65% by weight zinc chloride and 10% by weight sodium chloride. The aqueous solution was agitated at 80°C for two hours such that the polyketone polymer was dissolved in the aqueous solution, whereby a dope with a polymer content of 8% by weight was obtained.

The dope was heated to 80°C, filtered with a 20 μm sintered filter, and extruded from a 50-hole spinneret with a hole diameter of 0.10 mm into water containing 5% by weight of zinc chloride, at a temperature of 18°C, at an extrusion rate of 2.5 cc/min after passing through a 10 mm air gap so as to form coagulated filaments while drawing at a rate of

3.2 m/min.

The coagulated yarn was rinsed with a 25°C aqueous solution of sulfuric acid having a concentration of 2% by weight, further rinsed with 30°C water, and then wound at a rate of 3.2 m/min.

The coagulated yarn was impregnated with 0.05% by weight (with respect to a polyketone polymer) IRGANOX 1098 (available from Ciba Specialty Chemicals K.K.) and 0.05% by weight IRGANOX 1076 (available from Ciba Specialty Chemicals K.K.), dried at 240°C, and then applied with a finishing agent, whereby an undrawn yarn was obtained.

The finishing agent used contained the following components: 30% of lauryl oleate, 30% of bisoxyethyl bisphenol A, 10% of a polyether (a propylene oxide-to-ethylene oxide ratio of 35 to 65 and a molecular weight of 20000), 5% of 10-mole polyethylene oxide-added oleyl ether, 23% of 10-mole polyethylene oxide-added castor oil ether, 1% of sodium stearyl sulfonate, and 1% of sodium dioctyl phosphate (ratio in terms of % by weight).

The resulting undrawn yarn was drawn at 240°C in a first step, drawn at 258°C in a second step, drawn at 268°C in a third step, drawn at 272°C in a fourth step, drawn at 200°C and a draw ratio of 1.08 (a draw tension of 1.8 cN/dtex) in a fifth step, and then wound on a reel. The overall draw ratio of the yarn drawn through the five steps was 17.1. The original yarn had high properties, that is, a strength of 15.6 cN/dtex, an elongation of 4.2%, and an elastic modulus of 347 cN/dtex. The yarn had a heat shrinkage of 4.3% after being dry-hated at 150°C for 30 minute. PK fibers made from the yarn were twisted into cords under conditions below.

(Examples 1 to 5 and Comparative Examples 1 to 4)

Test tires had a size of 225/45R17 and included bead fillers 8 made of rubber. The rubber used to form the bead fillers 8 was made from Compound A or B specified in Table 1. The rubber made from Compound A or B was used to produce the test tires as shown in Table 2. Carcass ply cords contained in each carcass layer 5 were prepared from the PK fibers under conditions specified in Table 2. Rayon fibers were used in comparative examples to prepare cords under conditions specified in Table 2. The test tires were evaluated for dynamic storage elastic modulus E' and low- and high-speed steering stability as described below.

(Dynamic storage elastic modulus E')

Vulcanized specimens (a thickness of 2 mm) made from rubber compositions shown in Table 1 were each measured with a tester such as a spectrometer (available from Toyo Seiki Seisaku-sho, Ltd.) under the following conditions: a temperature of 25°C, a frequency of 52 Hz, an initial load of 160 g, and a dynamic strain of 2.0%.

(Low- and high-speed steering stability)

The test tires were each attached to rim 71/2J, inflated to a pressure of 220 kPa, attached to a vehicle, and then evaluated for straight-steering stability, lane-changing ability, and cornering ability on the basis of driver's feeling under the following condition: an average speed of 60 km/h (low speed) or 100 km/h (high speed). The evaluation results on low-speed steering stability were indexed with a score of 100 assigned to the result obtained from Comparative Example 3 and the evaluation results on high-speed steering stability were indexed with a score of 100 assigned to the result obtained from Comparative Example 1. The evaluation results represented by higher scores are better. Table 2 shows the evaluation results.

[Table 1]

| | | Compound A | Compound B |
|---|---|---|---|
| Formulation (parts by weight) | Natural rubber | 100 | 100 |
| | Carbon black | 75 | 80 |
| | Oil | 10 | 5 |
| | Thermosetting resin | 25 | 8 |
| | Sulfur | 5 | 5 |

[Table 2]

| | | Example 1 | Example 2 | Comparative Example 1 | Example 3 | Example 4 | Example 5 | Comparative Example 2 | Comparative Example 3 | Comparative Example 4 |
|---|---|---|---|---|---|---|---|---|---|---|
| Bead filler rubber | Rubber type | A | A | B | B | B | B | B | B | B |
| | Reduction rate of E' from 30°C to 80°C(%) | 16 | 16 | 24 | 24 | 24 | 24 | 24 | 24 | 24 |
| Carcass ply cords | Materials | PK fiber | PK fiber | PK fiber | PK fiber | PK fiber | PK fiber | rayon | rayon | rayon |
| | Cord structures | 1100dtex/2 | 1100dtex/2 | 1670dtex/2 | 1670dtex/2 | 1670dtex/2 | 1670dtex/2 | 1840dtex/2 | 1840dtex/2 | 1840dtex/3 |
| | Total decitex | 2200 | 2200 | 3340 | 3340 | 3340 | 3340 | 3680 | 3680 | 5520 |
| | Twist coefficient | 0.62 | 0.79 | 0.24 | 0.44 | 0.62 | 0.79 | 0.54 | 0.75 | 0.75 |
| | Difference in heat shrinkage stress between 30°C and 80°C(cN/dtex) | $7.3\times10^{-2}$ | $10.7\times10^{-2}$ | $2.5\times10^{-2}$ | $3.6\times10^{-2}$ | $7.3\times10^{-2}$ | $10.7\times10^{-2}$ | $0.3\times10^{-2}$ | $0.4\times10^{-2}$ | $0.4\times10^{-2}$ |
| Tire performance | Low-speed steering performance (score) | 106 | 108 | 106 | 109 | 113 | 110 | 102 | 100 | 103 |
| | High-speed steering performance (score) | 110 | 113 | 100 | 115 | 118 | 118 | 71 | 70 | 72 |

## Claims

1. A pneumatic tire comprising a tread part (1), a pair of sidewall parts (2) extending from both ends of the tread part (1) in the radial direction of the tire, a pair of bead parts (3) located at the inside ends of the sidewall parts (2), a carcass layer (5) which includes at least one carcass ply and which toroidally extends between a pair of bead cores (4) embedded in the bead parts (3), bead fillers (8) arranged outside the bead cores (4) in the radial direction of the tire, and belt layers (6) which are arranged outside a crown portion of the carcass layer (5) in the radial direction thereof and which each include at least one belt ply, **characterized by**
a cord having a difference in heat shrinkage stress between 30°C and 80°C of not less than $3.0 \times 10^{-2}$ cN/dtex is used as a cord in the at least one carcass ply of the carcass layer (5), and the reduction rate of the 30-80°C dynamic storage elastic modulus E' of rubber used to form the bead fillers (8) is 5% or more.

2. The pneumatic tire according to Claim 1, wherein the at least one carcass ply cord contains 50% by mass or more of polyketone fibers.

3. The pneumatic tire according to Claim 2, wherein the polyketone fibers have a tensile strength of 10 cN/dtex or more.

4. The pneumatic tire according to Claim 2, wherein the polyketone fibers have an elastic modulus of 200 cN/dtex or more.

5. The pneumatic tire according to Claim 2, wherein the polyketone fibers have a heat shrinkage after dry-heat treatment at 150°C $\times$ 30 min in a range of 1% to 5%.

6. The pneumatic tire according to Claim 1, wherein a belt-protecting layer (7) is provided which includes at least one cord and the difference between the heat shrinkage stress of the cord at 30°C and that of the cord at 80°C is $7.0 \times 10^{-2}$ cN/dtex or more.

7. The pneumatic tire according to Claim 1, wherein the reduction rate of the 30-80°C dynamic storage elastic modulus E' of the rubber used to form the bead fillers (8) is 15% or more.

## Patentansprüche

1. Luftreifen, der aufweist: ein Laufflächenteil (1); ein Paar Seitenwandteile (2), die sich von beiden Enden des Laufflächenteils (1) in der radialen Richtung des Reifens erstrecken; ein Paar Wulstteile (3), die an den Innenseitenenden der Seitenwandteile (2) angeordnet sind; eine Karkassenschicht (5), die mindestens eine Karkassenlage umfasst, und die sich ringförmig zwischen einem Paar Wulstkernen (4) erstreckt, die in den Wulstteilen (3) eingebettet sind; Kernreiter (8), die außerhalb der Wulstkerne (4) in der radialen Richtung des Reifens angeordnet sind; und Gürtelschichten (6), die außerhalb eines Zenitabschnittes der Karkassenschicht (5) in der radialen Richtung davon angeordnet sind, und die jeweils mindestens eine Gürtellage umfassen, **dadurch gekennzeichnet, dass**
ein Kord mit einer Differenz bei der Wärmeschrumpfungsspannung zwischen 30 °C und 80 °C von nicht weniger als $3{,}0 \times 10^{-2}$ cN/dtex als Kord in der mindestens einen Karkassenlage der Karkassenschicht (5) verwendet wird, und die Verringerungsgeschwindigkeit des 30-80 °C dynamischen Lagerungs-Elastizitätsmoduls E' des Gummis, der für das Formen der Kernreiter (8) verwendet wird, 5 % oder mehr beträgt.

2. Luftreifen nach Anspruch 1, bei dem der mindestens eine Karkassenlagenkord 50 Masse-% oder mehr an Polyketonfasern enthält.

3. Luftreifen nach Anspruch 2, bei dem die Polyketonfasern eine Reißfestigkeit von 10 cN/dtex oder mehr aufweisen.

4. Luftreifen nach Anspruch 2, bei dem die Polyketonfasern einen Elastizitätsmodul von 200 cN/dtex oder mehr aufweisen.

5. Luftreifen nach Anspruch 2, bei dem die Polyketonfasern eine Wärmeschrumpfung nach der Trockenwärmebehandlung bei 150 °C x 30 min. in einem Bereich von 1 % bis 5 % aufweisen.

6. Luftreifen nach Anspruch 1, bei dem eine Gürtelschutzschicht (7) bereitgestellt wird, die mindestens einen Kord umfasst, und wobei die Differenz zwischen der Wärmeschrumpfungsspannung des Kordes bei 30 °C und der des

Kordes bei 80 °C 7,0 x $10^{-2}$ cN/dtex oder mehr beträgt.

7. Luftreifen nach Anspruch 1, bei dem die Verringerungsgeschwindigkeit des 30-80 °C dynamischen Lagerungs-Elastizitätsmoduls E' des Gummis, der für das Formen der Kernreiter (8) verwendet wird, 15 % oder mehr beträgt.

**Revendications**

1. Bandage pneumatique, comprenant une partie de bande de roulement (1), une paire de parties de flanc (2), s'étendant à partir des deux extrémités de la bande de roulement (1), dans la direction radiale du bandage pneumatique, une paire de parties de talon (3), agencées au niveau des extrémités intérieures des parties de flanc (2), une couche de carcasse (5), englobant au moins une nappe de carcasse et s'étendant toroïdalement entre une paire de tringles (4) noyées dans les parties de talon (3), des bourrages sur tringle (8), agencés à l'extérieur des tringles (4), dans la direction radiale du bandage pneumatique, et des couches de ceinture (6), agencées à l'extérieur d'une partie de sommet de la couche de carcasse (5), dans la direction radiale de celle-ci, et englobant chacune au moins une nappe de ceinture, **caractérisé en ce que**
un câblé, présentant une différence de contrainte de retrait thermique entre 30°C et 80°C non inférieure à 3,0 x $10^{-2}$ cN/dtex, est utilisé comme câblé dans la au moins une nappe de carcasse de la couche de carcasse (5), le taux de réduction de 30-80°C du module d'élasticité dynamique de stockage E' du caoutchouc utilisé pour former les bourrages sur tringle (8) correspondant à 5% ou plus.

2. Bandage pneumatique selon la revendication 1, dans lequel le câblé de la au moins une nappe de carcasse contient 50% en poids ou plus de fibres de polycétone.

3. Bandage pneumatique selon la revendication 2, dans lequel les fibres de polycétone présentent une résistance à la traction de 10 cN/dtex ou plus.

4. Bandage pneumatique selon la revendication 2, dans lequel les fibres de polycétone présentent un module d'élasticité de 200 cN/dtex ou plus.

5. Bandage pneumatique selon la revendication 2, dans lequel les fibres de polycétone présentent un retrait thermique après un traitement de chauffage à sec à 150°C, pendant 30 minutes, compris dans un intervalle allant de 1% à 5%.

6. Bandage pneumatique selon la revendication 1, comprenant une couche de protection de la ceinture (7), englobant au moins un câblé, la différence entre la contrainte de retrait thermique du câblé à 30° et celui du câblé à 80°C correspondant à 7,0 x $10^{-2}$ cN/dtex ou plus.

7. Bandage pneumatique selon la revendication 1, dans lequel le taux de réduction de 30-80°C du module d'élasticité dynamique de stockage E' du caoutchouc utilisé pour former les bourrages sur tringle (8) correspond à 15% ou plus.

FIG.1

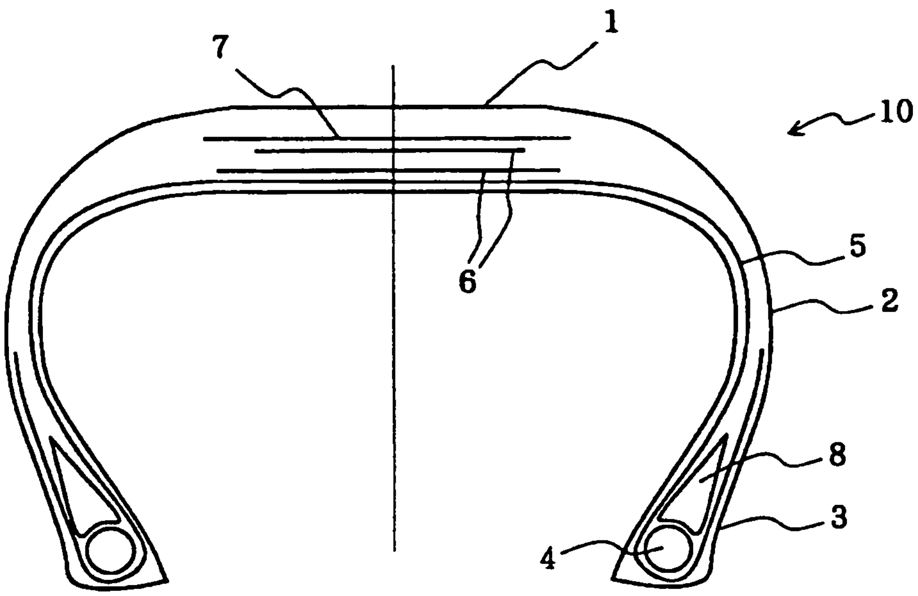

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000190705 A
- JP 2002307908 A
- JP 2004218189 A
- JP 2112413 A
- JP 4228613 A
- JP 4505344 PCT
- WO 9918143 A
- WO 0009611 A
- JP 2001164422 A
- JP 2004285221 A